# EUROPEAN PATENT APPLICATION

(11) **EP 2 165 757 A1**
(43) Date of publication of application: **24.03.2010**
(21) Application number: 08164415.5
(22) Date of filing: 16.09.2008
(51) Int. Cl.: B01J 19/00

(54) **Method and appliance for exothermal chemical processes with heat recovery**

(71) Applicant: Diaa Khafagy, Ahmed Mohammed, P.O. Box 2517 Saraia Alexandria (EG)
(72) Inventor: Diaa Khafagy, Ahmed Mohammed, P.O. Box 2517 Saraia Alexandria (EG)
(74) Representative: Stilkenböhmer, Uwe Michael

(57) **Abstract**

This invention relates to a method and appliance for carrying out exothermal chemical processes with efficient heat recovery. The recovered heat is utilized in Rankine power generation units to generate electric energy which is used to supply the electric energy demand of the exothermal chemical process, e.g. of pumps and cooling aggregates.

## Description

This invention relates to a method and appliance for carrying out exothermal chemical processes with efficient heat recovery.

Many important processes in the chemical industry are based on highly exothermal reactions such as e.g. oxidation, polymerization, hydrogenation, and neutralization. Exothermal chemical processes also play an important role in the pharmaceutical industry, biochemical processing, food and dairy processing etc.

Conventionally, those highly exothermal processes are carried out in batch (i.e. discontinuous) stirring tanks or semi batch stirring tanks. Typically, such apparatus is equipped with weighing balances to determine and check the required quantity of reactants, with temperature control means to control the temperature and with a cooling jacket to effect removal of the released heat of reaction.

However, in such conventional devices due to the low heat and mass transfer characteristics the reaction time is rather long and the production capacity is accordingly quite low.

Effective removal of the released heat is critical for the product quality and process safety. In the case of insufficient heat removal, the high temperature can cause degradation of the products of exothermal processes, thus resulting in production losses. Moreover the high temperature may cause safety or health hazards, especially in such processes wherein the vapor of the products is dangerous to the human body or to the environment.

Due to the requirement of effective cooling, exothermal processes in the chemical industry are very energy-intensive, since electrical energy is needed to drive the cooling aggregates. Furthermore, electric energy is needed to drive means for the delivery of the reactants, e.g. pumps.

Accordingly there is a need to provide methods and appliances allowing for effective recovery of the heat released by exothermal chemical processes, thus allowing for a reduction of the overall energy demand of the fabrication of chemical products based on exothermal processes.

Accordingly, there is provided a method for carrying out exothermal processes for the fabrication of chemical products wherein
- at least two reactants are combined in a continuous manner whereby at least one desired chemical product is obtained and heat is released,
- the released heat is recovered by transferring the heat to a fluid,
- electrical energy is generated utilizing the heated fluid in at least one Rankine power generation unit,
- the electrical energy generated by the at least one Rankine power generation unit is used to supply the electrical energy demand of the exothermal process.

Furthermore, there is provided an appliance for carrying out exothermal processes for the fabrication of chemical products, the appliance comprising
- means for the delivery of at least two reactants,
- at least one apparatus for combining said at least two reactants in a continuous manner whereby at least one desired chemical product is obtained and heat is released, the apparatus having means allowing transfer of the released heat to a fluid,
- at least one Rankine power generation unit for the generation of electrical energy utilizing the heated fluid,
- means to supply the electric energy generated by the at least one Rankine power generation unit to electric-driven components of the appliance.

In the context of the present application, an exothermal process for the fabrication of chemical products (exothermal chemical process) is construed to mean a process wherein the combination of reactants is directed to the formation of at least one chemical product which is collected for further utilization, either as such or as an educt for further processing; wherein heat is released upon combination of the reactants forming the desired product(s). Accordingly, processes like mere combustion processes wherein reactants are reacted for the sole purpose of generating heat, without generation of a useful product are not in the scope of the invention.

In the method of the invention, the heat released in the exothermal chemical process is transferred to a fluid which is accordingly heated. This fluid acts as the working fluid of a Rankine power generation unit, wherein the heated fluid is utilized for the generation of electric energy. Accordingly, in the appliance of the invention, an apparatus for the exothermal combination of reactants is provided, said apparatus having means to effectively transfer the heat released during the exothermal process to a fluid, and at least one Rankine power generation unit is provided utilizing the heated fluid for the generation of electrical energy. The electrical energy generated by the Rankine power generation unit is utilized to meet the electric energy demand of the exothermal chemical process, i.e. to supply electric-driven components of the appliance, i.e. pumps, cooling aggregates etc with electric energy.

A Rankine power generating unit is a system wherein a heated working fluid is evaporated in an evaporator and the vapor is subsequently superheated. Upon passing a turbine, the vapor is expanded and cooled down with subsequent condensation. The turbine drives a generator for the generation of electric energy. Typically, the working fluid used in the Rankine cycle process is water. However, use of organic working fluids is also known in the art (Organic Rankine cycle). The reversal process of the Rankine cycle process explained above it the process utilized in heat pump systems. Accordingly, the Rankine cycle process utilized in the method of the invention corresponds to the reversal heat pump process, and the Rankine power generation unit of the appliance of the invention can be considered as a reversal heat pump unit.

Compared to the prior art, the method and appliance of the present invention have significant advantages. Due to the recovery of the heat released by exothermal chemical processes and the utilization thereof for the generation of electric energy, exothermal chemical processes become more economically efficient and environmentally friendly. Due to the effective removal of the heat released during the exothermal process, the amount of energy required to achieve cooling is generally reduced. The electric energy generated by utilization of the recovered heat is applied to meet the remaining electric energy demand of the exothermal chemical process, i.e. to drive the cooling aggregates, pumps and other electric devices involved. In the most advantageous case, the process can be carried out in a way near to an autarkic (self-sustaining) manner with regard to electric energy.

Furthermore, due to the effective removal of the heat released by the exothermal chemical process, the amount of products which are out of specification due to effects like thermal degradation is significantly reduced. This is especially true in such cases where the quality and/or performance of a product are affected by its temperature treatment history.

Further details of the method and appliance are shown in the following detailed description and the figure.

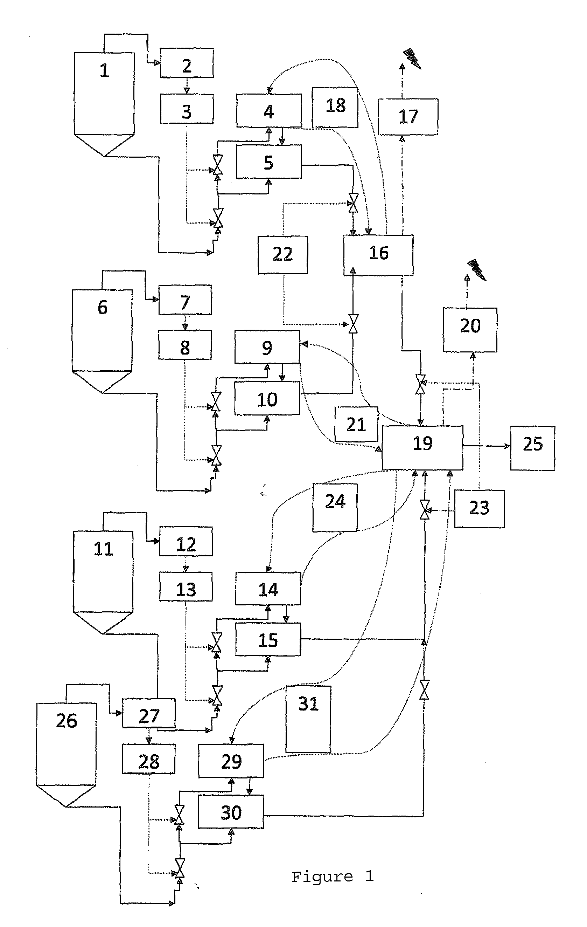

- Figure 1: is a flow diagram of an example of the method and appliance

In the process of the invention, two or more reactants can be combined in a continuous process. If there are more than two reactants, their combination can be achieved either in one step or in a plurality of consecutive steps, i.e. a first and a second reactant are combined in a first exothermal process, the product obtained from the combination of the first and the second reactant is combined with at least one further reactant (e.g. a third reactant) in a second exothermal process, optionally the product thereof is combined in a further exothermal process with further reactants, wherein in each of the exothermal processes the released heat is recovered by transfer to a fluid.

If there are four reactants their combination can be achieved by any of the following sequence of steps: Either the first and the second reactant are combined in a first exothermal process, then the product thereof and the third reactant are combined in a subsequent second exothermal process, and the product thereof is combined with the further reactant in a further exothermal process resulting in the desired product. Alternatively, a first and a second reactant are combined in a first exothermal process, and a third and a fourth reactant are combined in a second exothermal process, and the products of the first and second exothermal process are combined in a further exothermal process resulting in the desired product.

The method of the invention can also be applied to exothermal processes forming a step (stage) of a sequence of process steps, wherein not all process steps are exothermal.

Combining of the reactants is achieved by means of an apparatus allowing for effective transfer of mass and heat. Accordingly, the reactants may be combined in a static mixer, plate heat exchanger, spiral heat exchanger, in a heat exchanger static mixer, or by means of ejectors. Due to the high heat transfer coefficient of such types of continuous apparatus, the time needed for completing the exothermal process is decreased, and the production capacity and the yield of the highly exothermal process are increased. The use of ejectors is preferred due to the advantage of reducing the number of pumps and accordingly of electricity demand, the accurate control of the composition of the reaction mixture, and reduction of the maintenance costs and requirements.

The reactants to be combined in the exothermal process are either in the liquid or in the dissolved state (dissolved in a liquid solvent), however addition of reactant(s) in the solid state to reactants in the liquid or dissolved state is also possible, provided that the exothermal process of the combination of the reactants proceeds in the liquid phase.

If any of the reactants is supplied in a concentration exceeding the prescribed specification then it may be diluted with water, organic, or inorganic solvents, with high heat capacity.

On the other hand, if any of the reactants is delivered in a concentration below the prescribed specification, the concentration may be upgraded by evaporation of the solvent in an evaporation vessel utilizing heat recovered from the exothermal process. Preferably the evaporation is carried out under vacuum, thus allowing for evaporation at reduced temperature and avoiding thermal degradation of the reactant the concentration of which is upgraded.

The first reactant may be of acidic nature. Typical examples of the first reactant of the exothermal process are sulphuric acid, hydrochloric acid, polyphosphoric acids, polyphosphonic acids, polycarboxylic acids, aminoalkylsulphonic acids, or trimethylene phosphonic acids, hydroxyl-ethane-1,1 diphosphonic acid, phosphonobutane tri carboxylic acid, aminotrimethylene phosphonic acid, and their derivatives; wherein this list shall not be construed as limiting. Preferably the first reactant is selected from polyphoshoric acids, polyposphonic acids, and polycarboxylic acids, and more preferably the first reactant is preferably polycarboxylic acid in the range of 20 to 60%;

The second reactant may be of acidic, neutral or alkaline nature. Typical examples of the second reactant of the exothermal process are hypophosphorous acid, acrylic acid, poly acrylic acids, water, polyacryloamides, mercaptoacetic acid, polymaleic acid, mercapto-ethanol, phosphorous acid, methacrylic acid, polymethacrylic acids, methacrylic co-polymeric acids, N-substituted acrylamides, sulphoalkylmethacrylamide, and their derivatives; wherein this list shall not be construed as limiting. Preferably the second reactant is selected from polyacrylic acids, hypophosphorous acids and polymaleic acids, and more preferably the second reactant is polymaleic acid in the range of 20 to 50%.

The third reactant may be of alkaline nature. Typical examples are amines, phenols, substituted phenols, calcium hydroxide, sodium hydroxide, or potassium hydroxide; wherein this list shall not be construed as limiting. Preferably the third reactant is selected from potassium hydroxide and sodium hydroxide, and more preferably the third reactant is sodium hydroxide in the range of 5 to 15 %;

Optionally, a fourth reactant may be utilized, for instance water, 2 phosphonobutane-1,2,4 tri carboxylic acid, and their derivatives and their sodium/ potassium salts, or an organic or inorganic solvent with high heat transfer characteristics.

The quantity of the added reactants is monitored by mass flow transmitters.

The temperature of the reaction mixture is controlled utilizing the flow rates of the added reactants, the flow rates of the cooling media, and the heat of evaporation of diluted reactants, if available.

Preferably, the quality of the reaction mixtures and products is monitored by means of online (process-integrated) analyzers such as analyzers for Karl Fischer analysis. Online analysis of the product of the exothermal process helps to optimise the product quality. This also reduces the retention time of the process product till the laboratory result is obtained. Accordingly, the production capacity and yield of the process is increased.

In figure 1, a flow diagram of an example of the method and appliance of the invention is shown. In this example, at least three reactants A, B, and C are combined. Exothermal combination of the reactants is achieved in two subsequent process steps with reactants A and B being combined in a first exothermal process using a first apparatus with recovery of heat, and the product obtained by the combination of reactants A and B being combined with reactant C in a second exothermal process in a second apparatus with recovery of heat.

Reactants A, B and C, each being in the liquid or dissolved state, are stored in storage tanks 1, 6, 11. Each of the storage tanks 1, 6, 11 resp. is in fluid communication with an analyzer 2, 7, 12. If the analysis result complies with the required specification, a signal (dotted lines) is forwarded from the analyser 2, 7, 12 to a respective controller 3, 8, 13 which acts to open a valve allowing flow of the respective reactant A, B, C into the respective concentration adjustment tank 5, 10, 15. Herein, the concentration of reactants A, B and C, resp. is adjusted. If the concentration of a reactant is too high, additional solvent can be added into the respective concentration adjustment tank (not shown in figure 1). In the opposite case, i.e. if the reactant concentration is too low, the respective controller 3, 8, 13 acts to open another valve allowing flow of the respective reactant to a respective evaporator 4, 9, 14 located upstream to the respective concentration adjustment tank 5, 10, 15. In the evaporator 4, 9, 14, the concentration of that respective reactant A, B, C is increased by evaporation of solvent, preferably under vacuum. Heating of the evaporators 4, 9, 14 is achieved by heating means 18, 21, 24 using heat recovered from the exothermal combination of the reactants. Heating means 18 of the evaporator 4 uses heat recovered from the exothermal process of combining reactants A and B in the first apparatus 16. Heating means 21 of the evaporator 9 and heating means 24 of the evaporator 14 use heat recovered from the exothermal process of combining reactant C with the product obtained by the combination of reactants A and B in the second apparatus 19.

As explained above, the first apparatus 16 and the second apparatus 19 each may be any apparatus allowing for effective transfer of mass and heat, e.g. a static mixer, plate heat exchanger, spiral heat exchanger, heat exchanger static mixer, or ejector. Apparatus 16 and 19 may be of the same type or of different types.

The concentration ratio between reactants A and B is controlled by means of controller 22. Controller 22 acts (dotted lines) on valves in the pipelines connecting the concentration adjustment tanks 5 and 10 of reactants A and B with apparatus 16, thus controlling the flow rates of both reactants in order to achieve the desired concentration ratio. The concentration ratio between reactant C and the product obtained by the combination of reactants A and B is controlled by means of controller 23. Controller 23 acts (dotted lines) on a valve in the pipeline connecting concentration adjustment tank 15 of reactant C to apparatus 19 and also on a valve in the pipeline connecting apparatus 16 to apparatus 19, thus controlling the flow rates of reactant C and the product of combined reactants A and B in order to achieve the desired concentration ratio. Means are provided allowing the final product to be collected from the second apparatus 19 and stored in tank 25.

In the first apparatus 16 and the second apparatus 19, the heat released upon combination of the reactants is transferred to a fluid which is accordingly heated. The heated fluids are utilized in Rankine power generation units 17, 20 to generate electric energy (symbolized in figure 1 by a flash in each case). Heat recovered from the first apparatus 16 is utilized in a reversal heat pump (Rankine power generation unit) 17 for the generation of electric energy. Heat recovered from the second apparatus 19 is utilized in a second reverse heat pump (Rankine power generation unit) 20 for the generation of electric energy. The transfer of heat from apparatuses 16, 19 to Rankine power generation units 17, 20 is shown by chain lines (dash-dotted lines). The electric energy generated in the generators 17 and 20 is used to supply any electric consumers involved in the process, i.e. pumps, cooling aggregates etc.

If there is a further reactant D, then the appliance comprises a further storage tank 26, with analyser 27 and controller 28, a concentration adjustment tank 30 for this reactant, and an evaporator 29 for upgrading of the concentration of this reactant heated by a heating means 31 using heat recovered from the exothermal process in the second apparatus 19. After adjustment of concentration, reactant D is added to reactant C and the obtained mixture is directed to apparatus 19. The amount of reactant D added to reactant C can be adjusted by means of a valve located upstream of the point of connection of the pipelines from reactant C concentration adjustment tank 15 and reactant D adjustment tank 30.

To sum it up, in the method shown in the flow diagram of figure 1
- a first and a second reactant are combined in a continuous manner in a first continuous exothermal process,
- the product obtained from the combination of the first and the second reactant is combined in a continuous manner with a third reactant and optionally a further reactant in a second exothermal process whereby at least one desired chemical product is obtained ,
- wherein in the first and the second exothermal process the released heat is recovered by transferring the heat to a fluid,
- electrical energy is generated utilizing the heated fluid of the first exothermal process in a first Rankine power generation unit and the heated fluid of the second exothermal process in a second Rankine power generation unit,
- the electrical energy generated by each Rankine power generation unit is used to supply the electrical energy demand of the exothermal process.

Accordingly, the appliance the flow diagram of which is shown in figure 1 comprises
- means 1, 5, 6, 10 for the delivery of a first reactant and a second reactant,
- a first apparatus 16 for exothermally combining in a continuous manner said first reactant and second reactant,
- means 11, 15 for the delivery of a third reactant,
- optionally means 26, 30 for the delivery of a further reactant,
- downstream in relation to the first apparatus 16, a second apparatus 19 for exothermally combining in a continuous manner said third reactant and if available said further reactant with the product obtained in the first apparatus 16 by the combination of the first and second reactant, whereby at least one desired chemical product is obtained,
- the first apparatus 16 and the second apparatus 19 each having means allowing transfer of the released heat to a fluid,
- the first apparatus 16 being in cooperation with a first Rankine power generation unit 17 wherein electric energy is generated utilizing the fluid heated in the first apparatus 16,
- the second apparatus 19 being in cooperation with a second Rankine power generation unit 20 wherein electric energy is generated utilizing the fluid heated in the second apparatus 19,
- the appliance further comprising means to supply the electric energy generated by each Rankine power generation unit 17, 20 to electrically driven components of the appliance.

## Claims

1. Method for carrying out exothermal processes for the fabrication of chemical products, wherein
- at least two reactants are combined in a continuous manner whereby at least one desired chemical product is obtained and heat is released,
- the released heat is recovered by transferring the heat to a fluid,
- electrical energy is generated utilizing the heated fluid in at least one Rankine power generation unit,
- the electrical energy generated by the at least one Rankine power generation unit is used to supply the electrical energy demand of the exothermal process.

2. Method according to claim 1, **characterized in that** the combination of the reactants is carried out in the liquid phase.

3. Method according to claim 1 or 2, **characterized in that** at least three reactants are combined.

4. Method according to claim 3, **characterized in that**
- a first and a second reactant are combined in a continuous manner in a first continuous exothermal process,
- the product obtained from the combination of the first and the second reactant is combined in a continuous manner with a third reactant and optionally a further reactant in a second exothermal process whereby at least one desired chemical product is obtained,
- wherein in the first and the second exothermal process the released heat is recovered by transferring the heat to a fluid,
- electrical energy is generated utilizing the heated fluid of the first exothermal process in a first Rankine power generation unit and the heated fluid of the second exothermal process in a second Rankine power generation unit,
- the electrical energy generated by each Rankine power generation unit is used to supply the electrical energy demand of the exothermal process.

5. Method according to claim 3 or 4, **characterized in that**
the first reactant is of acidic nature,
the second reactant is of acidic, neutral or alkaline nature, and
the third reactant is of alkaline nature.

6. Method according to claim 3 or 4, **characterized in that**
the first reactant is selected from a group consisting of sulphuric acid, hydrochloric acid, polyphosphoric acids, polyphosphonic acids, polycarboxylic acids, aminoalkylsulphonic acids, or trimethylene phosphonic acids, hydroxyl-ethane-1,1 diphosphonic acid, phosphonobutane tri carboxylic acid, aminotrimethylene phosphonic acid, and their derivatives; preferably polyphoshoric acid, polyposphonic acids, and polycarboxylic acids, and more preferably polycarboxylic acid in the range of 20 to 60%;
the second reactant is selected from a group consisting of hypophosporous acid, acrylic acid, poly acrylic acids, water, polyacryloamides, mercaptoacetic acid, polymaleic acid, mercapto-ethanol, phosphrous acid, methacrylic acid, polymethacrylic acids, methacrylic co-polymeric acids, N-substituted acrylamides, sulphoalkylmethacrylamide, and their derivatives; preferably polyacrylic acids, hypophosohorous acids and polymaleic acids, and more preferably polymaleic acid in the range of 20 to 50%;
the third reactant is selected from a group consisting of amines, phenols, substituted phenols, calcium hydroxide, sodium hydroxide, or potassium hydroxide; preferably potassium hydroxide and sodium hydroxide, and more preferably sodium hydroxide in the range of 5 to 15 %
and if available the fourth reactant is selected from the group consisting of water, 2 phosphonobutane-1,2,4 tri carboxylic acid, and their derivatives and their sodium/ potassium salts, or an organic or inorganic solvent with high heat transfer characteristics.

7. Method according to any of the preceding claims, **characterized in that** each of the exothermal processes is carried out in a static mixer, plate heat exchanger, spiral heat exchanger, in a heat exchanger static mixer, or by means of ejectors.

8. Method according to any of the preceding claims, **characterized in that** process-integrated online analysers (such as for Karl Fischer analysis) is used to monitor the quality of the reaction mixture and the products of the exothermal processes.

9. Appliance for carrying out exothermal processes for the fabrication of chemical products, the appliance comprising
- means for the delivery (1, 5; 6, 10; 11, 15; 26; 30) of at least two reactants,
- at least one apparatus (16, 19) for combining said at least two reactants in a continuous manner whereby at least one desired chemical product is obtained and heat is released, the apparatus having means allowing transfer of the released heat to a fluid,
- at least one Rankine power generation unit (17, 20) for the generation of electrical energy utilizing the heated fluid,
- means to supply the electric energy generated by the at least one Rankine power generation unit (17, 20) to electrically driven components of the appliance.

10. Appliance according to claim 9, **characterized in that** the combination of the reactants is carried out in the liquid phase.

11. Appliance according to claim 9 or 10, **characterized in that** the appliance comprises
- means for the delivery of a first and a second reactant (1,5; 6,10)
- a first apparatus (16) for exothermally combining in a continuous manner said first reactant and second reactant,
- means for the delivery of a third reactant (11, 15)
- optionally means for the delivery of a further reactant (26, 30)
- downstream in relation to the first apparatus (16), a second apparatus (19) for exothermally combining in a continuous manner said third reactant and if available said further reactant with the product obtained in the first apparatus (16) by the combination of the first and second reactant, whereby at least one desired chemical product is obtained,
- the first apparatus (16) and the second apparatus (19) each having means allowing transfer of the released heat to a fluid,
- the first apparatus (16) being in cooperation with a first Rankine power generation unit (17) wherein electric energy is generated utilizing the fluid heated in the first apparatus (16),
- the second apparatus (19) being in cooperation with a second Rankine power generation unit (20) wherein electric energy is generated utilizing the fluid heated in the second apparatus (19),
- the appliance further comprising means to supply the electric energy generated by each Rankine power generation unit (17, 20) to electrically driven components of the appliance.

12. Appliance according to claim 9, 10 or 11, **characterized in that** the apparatuses (16, 19) for the exothermal combination of reactants are static mixers, plate heat exchangers, spiral heat exchangers, heat exchanger static mixers, or ejectors.

13. The appliance according to claim 9, 10, 11, or 12, **characterized in that** means are provided for upgrading the concentration of each reactant by evaporation of the solvent, such means comprising an evaporation vessel (4, 9, 14; 29) supplied with heat by a heating means (18, 21, 24, 31) using heat recovered from at least one apparatus (16, 19) for the exothermal combination of reactants

14. The appliance according to claim 9, 10, 11, 12 or 13, **characterized in that** mass flow transmitters (3, 8, 13; 22, 23, 28) are provided to monitor the quantity of the added reactants.

15. The appliance according claim 9, 10, 11, 12, 13 or 14, **characterized in that** the appliance comprises integrated analysers to monitor the quality of the reaction mixture and the products.
